(19) Europäisches Patentamt
European Patent Office
Office européen des brevets

(11) EP 2 299 093 B1

(12) **EUROPEAN PATENT SPECIFICATION**

(45) Date of publication and mention
of the grant of the patent:
**27.03.2013 Bulletin 2013/13**

(51) Int Cl.:
*F02D 11/10* *(2006.01)*　　*F02D 17/04* *(2006.01)*
*F02D 31/00* *(2006.01)*　　*B60W 30/18* *(2012.01)*
*F02D 41/02* *(2006.01)*

(21) Application number: **10164259.3**

(22) Date of filing: **28.05.2010**

(54) **Saddle-riding-vehicle**

Sattelfahrzeug

Véhicule de type à enfourcher

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **11.09.2009 JP 2009210626**

(43) Date of publication of application:
**23.03.2011 Bulletin 2011/12**

(73) Proprietor: **Yamaha Hatsudoki Kabushiki Kaisha
Shizuoka-ken Shizuoka 438-8501 (JP)**

(72) Inventor: **Nakagawa, Yoshitomi
Shizuoka-ken 438-8501 (JP)**

(74) Representative: **Stöckeler, Ferdinand et al
Schoppe, Zimmermann, Stöckeler & Zinkler
Patentanwälte
Postfach 246
82043 Pullach bei München (DE)**

(56) References cited:
**EP-A1- 2 053 221　　DE-A1- 10 035 166
US-A- 4 881 428　　US-A1- 2006 065 239**

**Description**

TECHNICAL FIELD

The present invention relates to a saddle-riding vehicle.

BACKGROUDN ART

The saddle-riding vehicles are generally provided with well-known technology that revolution speed of an engine (hereinafter referred to as "engine speed") or speed of a vehicle (hereinafter referred to as "vehicle speed") is prevented from exceeding a predetermined value once reaching it.

For example, Japan Laid-open Patent Application Publication No. JP-A-2006-104953 describes a motor cycle provided with an electrically controlled throttle. When the engine speed reaches a predetermined value, the motor cycle is configured to set the opening degree of the throttle valve to be less than a standard opening degree set in response to the accelerator operation amount. The intake air amount is accordingly reduced, and this results in restriction of the engine output. As a result, the engine speed is restricted not to exceed the predetermined value.

TECHNICAL PROBLEM

The foregoing saddle-riding vehicle, however, has the following drawback. Even if the engine speed actually reaches the predetermined value, a rider does not easily notice it. Therefore, the rider may continue driving of the vehicle without shifting gears up.

DISCLOSURE OF THE INVENTION

The present invention is produced in view of the foregoing drawback. The present invention addresses a need of producing a saddle-riding vehicle for inhibiting a rider from driving the vehicle without shifting gears up.

A saddle-riding vehicle according to an aspect of the present invention includes a wheel, an engine, a speed-change device, an intake path, a throttle valve, a speed detector, a throttle opening degree control section, and an engine output control section. The speed-change device is configured to transmit driving force of the engine to the wheel while changing speed of the driving force in a plurality of speed stages. The intake path is configured to introduce air into the engine. The throttle valve is mounted in the intake path. The speed detector is configured to detect either revolution speed of the engine or speed of the vehicle. The throttle opening degree control section is configured to control opening degree of the throttle valve based on the speed detected by the speed detector. The throttle opening degree control section is configured to reduce the opening degree of the throttle valve when the detected speed is greater than or equal to predetermined first speed. The engine output control section is configured to activate an engine output inhibition control when the detected speed is greater than or equal to second speed, which is faster than the first speed, under a condition where the speed-change device is set to be in a speed stage lower than a highest speed stage. Here, the engine output inhibition control is a type of control for inhibiting output of the engine. The throttle opening control section is configured to moderate change of the opening degree of the throttle valve with respect to change of the detected speed during activation of the engine output inhibition control than change of the opening degree of the throttle valve with respect to change of the detected speed during deactivation of the engine output inhibition control.

According to the saddle-riding vehicle of the aspect of the present invention, the engine output is inhibited when the detected speed is greater than or equal to the second speed under the condition where the speed-change device is set to be in a speed stage lower than the highest speed stage. The configuration allows a rider to feel that the detected speed reaches the second speed. Accordingly, the rider is encouraged to shift gears up.

On the other hand, the detected speed is reduced when the engine output is inhibited with the foregoing control. However, the detected speed is increased when inhibition of engine output is subsequently cancelled. When the detected speed then reaches the second speed, the engine output is again inhibited. Thus, a phenomenon occurs that the detected speed is repetitively increased and decreased at a speed range roughly equal to the second speed. Further, the opening degree of the throttle valve is reduced when the detected speed is greater than or equal to the first speed. In other words, the opening degree of the throttle valve is significantly changed with respect to a slight change of the detected speed at a speed range roughly equal to the second speed. Therefore, the opening degree of the throttle valve may be significantly changed in a short cycle with respect to change of the detected speed when the detected speed is repetitively increased and decreased at a speed range roughly equal to the second speed.

The passenger automobiles are generally heavier than the saddle-riding vehicles. In other words, the passenger automobiles do not quickly respond to change of the engine output. Even if actually occurring, the foregoing phenomenon will not be a big problem in the passenger automobiles. However, the saddle-riding vehicles are lightweight vehicles.

Therefore, riders of the saddle-riding vehicles sensitively feel change of the engine output. In other words, riders may feel uncomfortableness when the foregoing phenomenon occurs.

To deal with the drawback, the throttle opening section in the saddle-riding vehicle of the aspect of the present invention is configured to further moderate change of the opening degree of the throttle valve with respect to change of the detected speed during activation of the engine output inhibition control than that during deactivation of the engine output inhibition control. Therefore, significant change of the throttle opening degree can be inhibited even when the detected speed is repetitively increased and decreased. Consequently, it is possible to inhibit a rider from feeling uncomfortableness during activation of the engine output inhibition control.

ADVANTAGEOUS EFFECTS OF THE INVENTION

According to the saddle-riding vehicle of the present invention, it is possible to inhibit a rider from driving the vehicle without shifting gears up, and it is simultaneously possible to inhibit a rider from feeling uncomfortableness.

BRIEF DESCRIPTION OF THE DRAWINGS

FIG.1 is a left side view of a motor cycle according to a first exemplary embodiment of the present invention.
FIG.2 is a schematic view of a handle.
FIG.3 is a control block diagram of the motor cycle.
FIG. 4 is composed of charts showing data mapping of a throttle opening degree under a condition where a speed-change device is set to in a fifth-speed shift position.
FIG. 5 is composed of charts showing data mapping of a throttle opening degree under a condition where the speed-change device is set to be in a fourth-speed shift position.
FIG. 6 is a flowchart for determining whether or not an engine output inhibition control is currently activated.
FIG.7 is a flowchart for showing a throttle opening degree control during activation of the engine control inhibition control.
FIG.8 is a chart for showing a comparison example of change of actual engine speed and change inhibition speed data.
FIG. 9 is a chart for showing advantageous effects of the motor cycle according to the exemplary embodiment.
FIG. 10 is a change inhibition table of a motor cycle according to a second exemplary embodiment of the present invention.
FIG. 11 is a chart for showing data mapping of throttle opening degree of a motor cycle according to a third exemplary embodiment of the present invention and the maximum throttle opening.

BEST MODE FOR CARRYING OUT THE INVENTION

Exemplary embodiments of the present invention will be hereinafter described with reference to attached drawings.

<First Exemplary Embodiment>

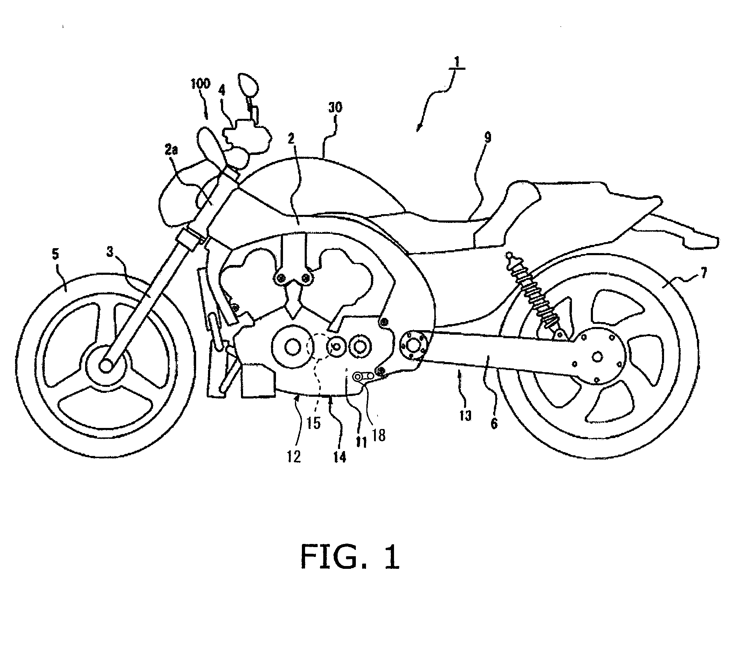

FIG. 1 illustrates a motor cycle 1 as an example of a saddle-riding vehicle according to a first exemplary embodiment of the present invention. Directional terms "right" and "left" and their related words hereinafter refer to "a right direction" and "a left direction" seen from a rider sitting on a seat 9 of the motor cycle 1 unless any specific explanation is provided for limiting the meanings of the terms.

(Entire Structure of Motor Cycle 1)

As illustrated in FIG.1, the motor cycle 1 according to an exemplary embodiment of the present invention includes various components such as a vehicle body frame 2, a front wheel 5, a rear wheel 7, a handle 4, the seat 9, an engine 12, a speed-change device 11, and a clutch 15.

The vehicle body frame 2 supports various components such as the engine 12, the speed-change device 11, and the seat 9. The vehicle body frame 2 includes a head pipe 2a. The head pipe 2a supports a front fork 3 while allowing the front fork 3 to turn. The bottom portion of the front fork 3 supports the front wheel 5 while allowing the front wheel 5 to rotate. A swing arm 6 is attached to the rear end portion of the vehicle body frame 2 in a pivotable state. The rear wheel 7 is attached to the rear end portion of the swing arm 6 in a rotatable state.

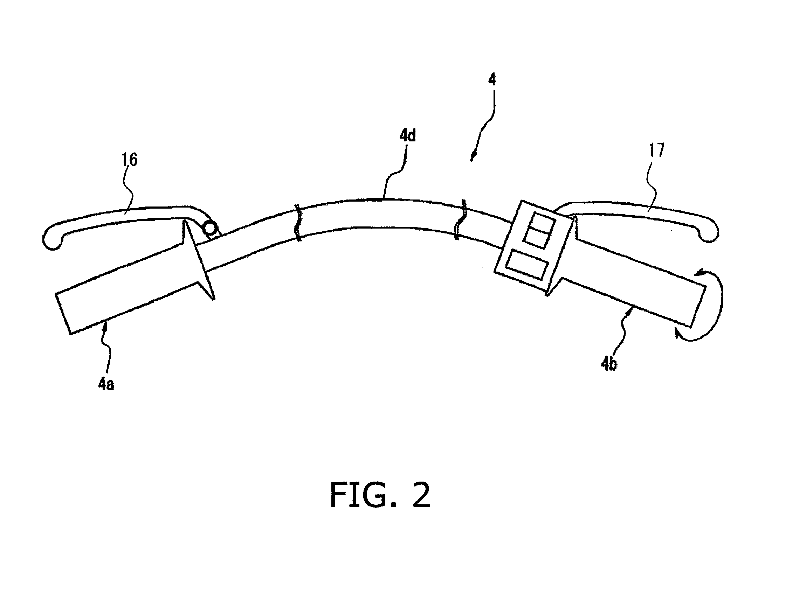

The handle 4 is attached to the top portion of the front fork 3. As illustrated in FIG.2, the handle 4 is mainly composed of a handle bar 4d, a left grip 4a, a clutch lever 16, a right grip 4b, and a brake lever 17.

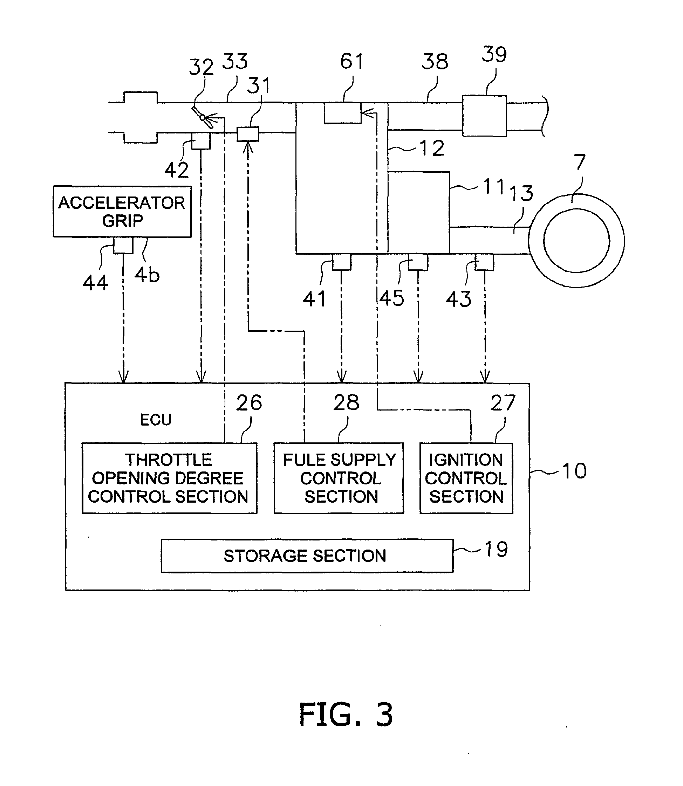

The handle bar 4d is connected to the head pipe 2a (see FIG.1). The left grip 4a is mounted to the left end portion of the handle bar 4d. The clutch lever 16 is disposed in front of the left grip 4a. A rider is allowed to operate the clutch 15 through grabbing of the clutch lever 16. The right grip 4b is mounted to the right end portion of the handle bar 4d while being rotatable about the handle bar 4d. When a rider twists the right grip 4b, a throttle valve 32 described below (see FIG.3) is accordingly operated. Specifically, the opening degree of the throttle valve 32 is regulated. The opening degree of the throttle valve 32 will be hereinafter referred to as "throttle opening degree", and the right grip 4b will be hereinafter referred to as "accelerator grip 4b" in the exemplary embodiment. The brake lever 17 is disposed in front of the accelerator grip 4b. A rider is allowed to operate a brake device (not illustrated in the figure) through grabbing of the brake lever 17.

As illustrated in FIG. 1, the seat 9 is disposed on the vehicle body frame 2. A fuel tank 30 is disposed in front of the seat 9. The fuel tank 30 contains fuel to be supplied to the engine 12.

The engine 12 is attached to the vehicle body frame 2. The engine 12 is, for instance, a V-type 2-cylinder 4-cycle engine using gasoline as its fuel. However, the number of cylinders and the type of the engine 12 are not particularly limited to the above. For example, the engine 12 may be a two-cycle engine. Further, the engine 12 may be an air-cooling engine or a water-cooling engine.

The speed-change device 11 is configured to output driving force of the engine 12 while reducing the speed of the driving force. Further, the speed-change device 11 is configured to shift gears up and down in plural shift positions respectively corresponding to plural speed stages. In the exemplary embodiment, the speed-change device 11 is configured to shift gears up and down in five shift positions. However, the speed-change device 11 may be configured to shift gears up and down in more than five shift positions or less than five shift positions. The speed-change device 11 shifts gears up/down to a shift position that is selected in response to a rider's operation of a shift lever 18. The shift lever 18 is disposed on the left side of the speed-change device 11. In the motor cycle 1, the engine 12 and the speed-change device 11 form a power unit 14. An output shaft of the speed-change device 11 is connected to the rear wheel 7 through a power transmission mechanism 13 (e.g., chain). Revolution of the engine 12 is transmitted to the rear wheel 7 through the speed-change device 11 and the power transmission mechanism 13. The rear wheel 7 is thus driven by revolution of the engine 12.

The clutch 15 is disposed on the right side portion of the power unit 14. The clutch 15 is configured to activate/deactivate power transmission from the engine 12 to the speed-change device 11 in response to a rider's operation of the clutch lever 16.


(Structures of Fuel System, Intake System and Exhaust System of Engine 12)

Next, structures of a fuel system, an intake system, and an exhaust system of the engine 12 will be hereinafter described with reference to FIG.3. As illustrated in FIG.3, the motor cycle 1 is provided with a fuel supply device 31, an intake pipe 33, the throttle valve 32, and an exhaust pipe 38.

The fuel supply device 31 is configured to supply the engine 12 with the fuel contained in the fuel tank 30. The fuel supply device 31 is configured to spray the fuel into the intake pipe 33. Alternatively, the fuel supply device 31 may configured to absorb the fuel out of the air stream within the intake pipe 33 by means of a carburetor and produce mixture gas. The fuel supply device 31 is electrically controlled by an engine control unit 10 described below.

The intake pipe 33 is a path for introducing air into the engine 12. Specifically, external air is inhaled into the intake pipe 33 through an air cleaner (not illustrated in the figure), and the inhaled air is then transferred to the engine 12 through the intake pipe 33.

The throttle valve 32 is disposed in the intake pipe 33. The throttle valve 32 is configured to regulate the amount of air flowing through the intake pipe 33 by adjusting the cross-sectional area in the flow path of the intake pipe 33. The throttle valve 32 is electrically controlled by the ECU10 described below. When the opening degree of the throttle valve 32 is changed through control of the throttle valve 32, the intake volume of the air flowing through the intake pipe 33 is changed. As a result, the engine output is changed.

Further, the engine 12 is provided with an ignition device 61. The ignition device 61 includes various components such as a spark plug and an intake bulb (not illustrated in the figure). The ignition device 61 is configured to ignite the fuel and the air flowing into a combustion chamber of the engine 12 through the intake pipe 33 for burning the fuel and the air.

The exhaust pipe 38 is disposed for discharging the exhaust gas produced in the engine 12 to the outside of the engine 12. Specifically, the exhaust gas is discharged from an exhaust bulb of the engine 12 (not illustrated in the figure) to the outside of the engine 12 through the exhaust pipe 38. Output of the engine 12 is changed depending on various factors such as discharge speed and discharge temperature of the exhaust gas. Further, the exhaust pipe 38 is provided with catalytic agent 39. The catalytic agent 39 purifies the exhaust gas.

(Configuration of Control System of Engine 12)

Next, configuration of a control system of the engine 12 will be described with reference to FIG.3. As shown in FIG.3, the motor cycle 1 is provided with various components such as an engine speed sensor 41, a throttle opening degree sensor 42, a vehicle speed sensor 43, an accelerator operation amount sensor 44, a shift position sensor 45, and the engine control unit 10 (hereinafter referred to as "the ECU 10").

The engine speed sensor 41 is configured to directly or indirectly detect revolution speed of the engine 12 (hereinafter referred to as "engine speed"). A set of information, indicating the engine speed detected by the engine speed sensor 41, is transmitted to the ECU 10 as a detection signal. When the engine speed sensor 41 indirectly detects the engine speed, the ECU 10 computes the engine speed based on the detection signal transmitted from the engine speed sensor 41.

The throttle opening degree sensor 42 is provided for the throttle valve 32. The throttle opening degree sensor 42 is configured to detect the throttle opening degree. A set of information, indicating the throttle opening degree detected by the throttle opening degree sensor 42, is transmitted to the ECU 10 as a detection signal.

The vehicle speed sensor 43 is mounted in the power transmission mechanism 13. The vehicle speed sensor 43 is configured to indirectly detect the vehicle speed of the motor cycle 1. For example, the vehicle speed sensor 43 is configured to detect the rotational speed of a sprocket to be driven by means of the chain of the power transmission mechanism 13. A set of information, indicating the vehicle speed detected by the vehicle speed sensor 43, is transmitted to the ECU 10 as a detection signal. The ECU 10 computes the vehicle speed based on the detection signal transmitted from the vehicle speed sensor 43.

The accelerator operation amount sensor 44 is attached to the accelerator grip 4b. The accelerator operation amount sensor 44 is configured to detect the operation amount of the accelerator grip 4b (hereinafter referred to as "accelerator operation amount"). A set of information, indicating the accelerator operation amount detected by the accelerator operation amount sensor 44, is transmitted to the ECU 10 as a detection signal.

The shift position sensor 45 is attached to the speed-change device 11. The shift position sensor 45 is configured to detect the current shift position of the speed-change device 11. A set of information, indicating the current shift position detected by the shift position sensor 45, is transmitted to the ECU 10 as a detection signal.

The ECU 10 is configured to electrically control the engine output based on the foregoing sets of information detected by the various sensors. The ECU 10 includes a throttle opening degree control section 26, a fuel supply control section 28, an ignition control section 27, and a storage section 19.

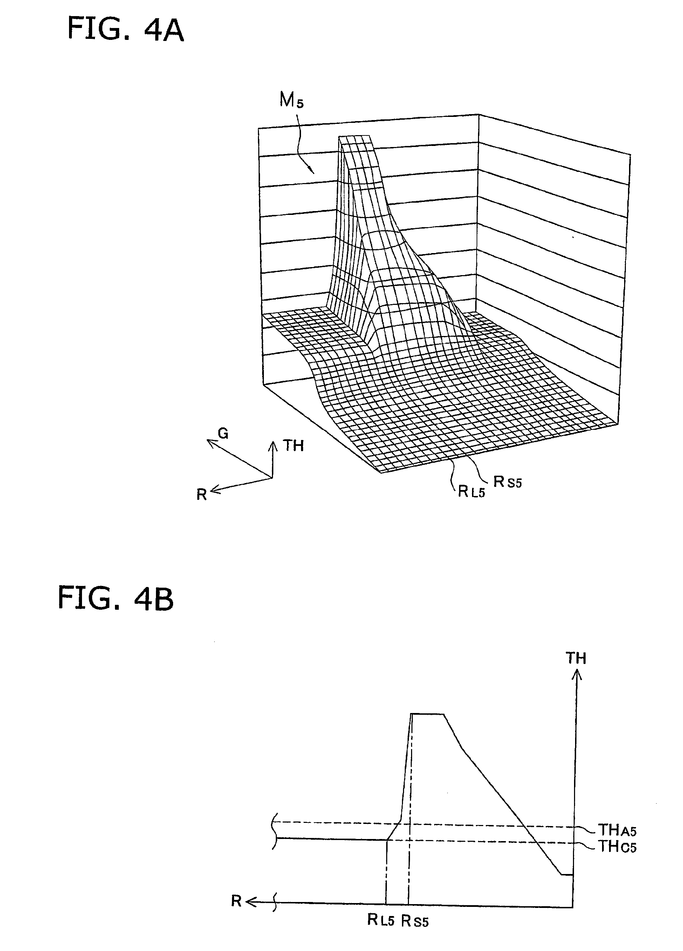

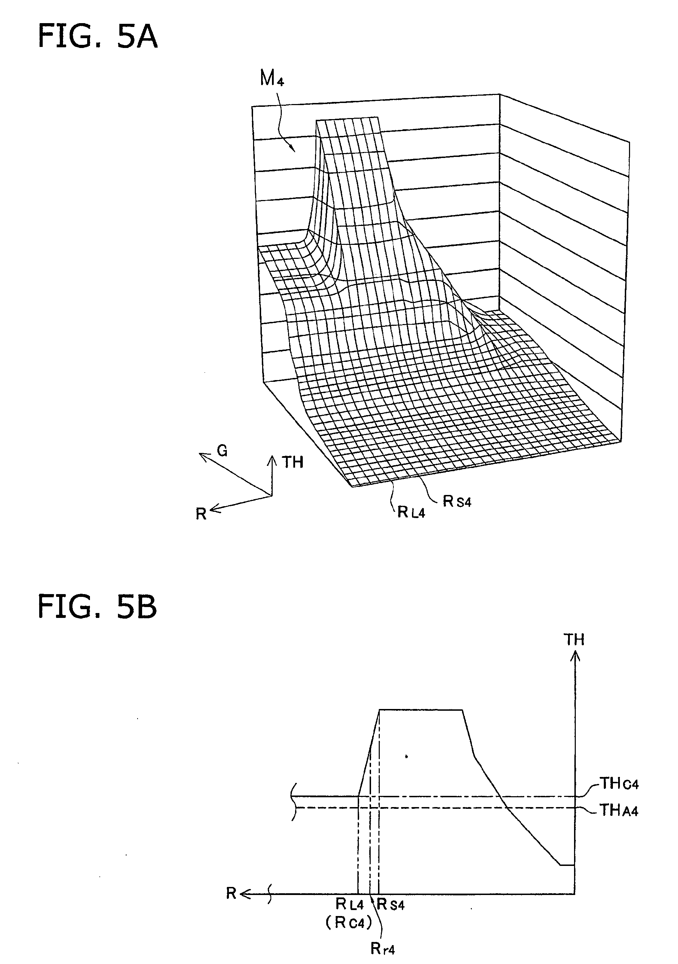

The throttle opening degree control section 26 is configured to control the throttle opening degree based on the foregoing sets of information detected by the various sensors and maps $M_n$ stored in the storage section 19. The maps $M_n$ are plural sets of data mapping for indicating a relation among engine speed R, throttle opening degree TH and accelerator operation amount G (see FIGS.4 and 5). The maps $M_n$ are respectively set for the individual shift positions of the speed-change device 11. In the exemplary embodiment, the speed-change device 11 is configured to shift gears up and down in five stage shift positions. Therefore, the storage section 19 stores five maps $M_1$ to $M_5$ corresponding to the first to fifth speed shift positions, respectively. It should be noted that the subscript "n" will hereinafter refer to the shift position set by the speed-change device 11. The maps $M_n$ to be used by the ECU 10 are switched in response to the shift positions set by the speed-change device 11.

Unit of the engine speed R is expressed, for instance, by "rpm (r/min)". Further, units of the throttle opening degree TH and the accelerator operation amount G are both expressed, for instance, by "(deg)". However, units of the above three parameters may not be necessarily expressed by the units. For example, unit of the engine speed R may be expressed by "(m/s)", whereas units of the throttle opening degree TH and the accelerator operation amount G may be expressed by "(%)". It should be noted that the foregoing symbols "r", "min", "deg", "m", and "s" stand for "revolution", "minute", "degree", "meter", and "second", respectively.

The throttle opening degree control section 26 is configured to select one of the maps $M_n$ that corresponds to the current shift position, and read out the selected one of the maps $M_n$ from the storage section 19. The throttle opening degree control section 26 determines a target value of the throttle opening degree by referring to the selected one of the maps $M_n$. Specifically, the target value is a value of the throttle opening degree corresponding to the engine speed detected by the engine speed sensor 41 and the accelerator operation amount detected by the accelerator operation amount sensor 44. The throttle opening degree control section 26 then controls the throttle valve 32 for setting its throttle opening degree to be matched with the target value. Specifically, the throttle opening degree control section 26 outputs a command signal, corresponding to the target value, to the throttle valve 32. The throttle valve 32 adjusts the throttle opening degree based on the received command signal. The intake volume of the engine 12 is thereby regulated, and output of the engine 12 is consequently changed.

Next, the maps $M_n$ will be hereinafter explained in detail. FIG.4(a) shows a map $M_5$ for a fifth-speed stage. FIG. 4(b) shows a relation between the engine speed R and the throttle opening degree TH where the accelerator operation amount G is a predetermined value (e.g., 90 degrees) in the map $M_5$ of FIG.4(a).

As shown in FIGs.4(a) and 4(b), the map $M_5$ indicates that the throttle opening degree TH decreases when the engine speed R exceeds a predetermined value under a condition where the accelerator operation amount G is greater than or equal to a predetermined value. In this case, the predetermined value of the engine speed R is referred to as setting revolution speed $R_{S5}$. It should be noted that the setting revolution speed $R_{S5}$ is set to be 7,500 r/min in the present exemplary embodiment. The setting revolution speed $R_{S5}$ is constant and independent from the accelerator operation amount G.

Further, the throttle opening degree TH will be constant when the engine speed R exceeds the setting revolution speed $R_{S5}$ and further becomes greater than or equal to a predetermined value under the condition where the accelerator operation amount G is greater than or equal to the predetermined value. The predetermined value of the engine speed R will be hereinafter referred to as regulation revolution speed $R_{L5}$. The regulation revolution speed $R_{L5}$ corresponds to regulation vehicle speed $V_{L5}$ of the fifth-speed stage. The regulation vehicle speed $V_{L5}$ is determined based on the driving performance of the engine 12 or travelling performance of the motor cycle 1. For example, the regulation vehicle speed $V_{L5}$ is less than the maximum speed of the saddle-riding vehicle. The maximum speed herein refers to, for instance, the autonomously-limited top speed (i.e., vehicle limit speed). In the present exemplary embodiment, the regulation revolution speed $R_{L5}$ is set to be 8,500 r/min. The regulation revolution speed $R_{L5}$ is constant and independent from the accelerator operation amount G in the map $M_5$. Further, a value of the throttle opening degree TH, which is constant when the engine speed R exceeds the regulation revolution speed $R_{L5}$, will be hereinafter referred to as convergent throttle opening degree $TH_{C5}$.

When the speed-change device 11 is set to be in the shift position of the fifth-speed stage, the throttle opening degree control section 26 is configured to control the throttle valve 32 by referring to the map $M_5$. Specifically, the throttle opening degree control section 26 is configured to reduce the throttle opening degree TH when the engine speed R is greater than or equal to the setting revolution speed $R_{S5}$. Further, the throttle opening degree control section 26 is configured to reduce the throttle opening degree TH in proportion to increase of the engine speed R when the engine speed R is in a range between the setting revolution speed $R_{S5}$ and the regulation revolution speed $R_{L5}$. The throttle opening degree control section 26 is configured to keep the throttle opening degree TH at the convergent throttle opening degree $TH_{C5}$ when the engine speed R is greater than or equal to the regulation revolution speed $R_{L5}$. In the fifth-speed stage, the convergent throttle opening degree $TH_{C5}$ is less than acceleration activation throttle opening degree $TH_{A5}$ at which the motor cycle 1 is allowed to accelerate. Therefore, the motor cycle 1 is prevented from accelerating when travelling at predetermined engine speed R greater than the regulation revolution speed $R_{L5}$.

Next, a map $M_4$ for the fourth-speed stage will be hereinafter explained in detail. FIG. 5 (a) shows the map $M_4$, whereas FIG. 5 (b) shows a relation between the engine speed R and the throttle opening degree TH where the accelerator operation amount G is a predetermined value (e.g., 90 degrees) in the map $M_4$ of FIG.5(a).

As illustrated in FIGS.5(a) and 5(b), the throttle opening degree TH decreases when the engine speed R exceeds a predetermined value under a condition where the accelerator operation amount G is greater than or equal to a predetermined value. The predetermined value of the engine speed R will be hereinafter referred to as setting revolution speed $R_{S4}$. In the present exemplary embodiment, the setting revolution speed $R_{S4}$ is set to be 9,000 r/min. The setting revolution speed $R_{S4}$ is constant and independent from the accelerator operation amount G. It should be noted, however, that the setting revolution speed $R_{S5}$ in the fifth-speed stage and the setting revolution speed $R_{S4}$ in the fourth-speed stage are different from each other.

Further, the throttle opening degree TH becomes constant when the engine speed R exceeds the setting revolution speed $R_{S4}$ and further becomes greater than or equal to a predetermined value under a condition where the accelerator operation amount G is greater than or equal to a predetermined value. The predetermined value of the engine speed R will be hereinafter referred to as regulation revolution speed $R_{L4}$. The regulation revolution speed $R_{L4}$ corresponds to regulation vehicle speed $V_{L4}$ of the fourth-speed stage. The regulation vehicle speed $V_{L4}$ is determined based on the driving performance of the engine 12 and the traveling performance of the motor cycle 1. In the present exemplary embodiment, the regulation revolution speed $R_{L4}$ is set to be 10,000 r/min. The regulation revolution speed $R_{L4}$ is constant and independent from the accelerator operation amount G in the map $M_4$. Further, a value of the throttle opening degree TH, which is constant when the engine speed R exceeds the regulation revolution speed $R_{L4}$, will be hereinafter referred to as convergent throttle opening degree $TH_{C4}$.

When the speed-change device 11 is set to be in the shift position of the fourth-speed stage, the throttle opening degree control section 26 is configured to control the throttle valve 32 by referring to the foregoing map $M_4$. Specifically, the throttle opening degree control section 26 is configured to reduce the throttle opening degree TH when the engine speed R is greater than or equal to the setting revolution speed $R_{S4}$. The throttle opening degree control section 26 is configured to reduce the throttle opening degree TH in proportion to increase of the engine speed R when the engine speed R is in a rage between the setting revolution speed $R_{S4}$ and the regulation revolution speed $R_{L4}$. Further, the throttle opening degree control section 26 is configured to keep the throttle opening degree TH at the convergent throttle opening degree $TH_{C4}$ when the engine speed R is greater than or equal to the regulation revolution speed $R_{L4}$. In the fourth-speed stage, the convergent throttle opening degree $TH_{C4}$ is greater than acceleration activation throttle opening degree $TH_{A4}$ at which the motor cycle 1 is allowed to accelerate. Therefore, the motor cycle 1 is allowed to accelerate in travelling even when the engine speed R exceeds the regulation revolution speed $R_{L4}$.

A map $M_1$ for the first-speed stage, a map $M_2$ for the second-speed stage, and a map $M_3$ for the third-speed stage are basically the same as the map $M_4$ for the fourth-speed stage. However, settings of the maps $M_1$, $M_2$, $M_3$ are different from a setting of the map $M_4$ regarding magnitudes of the setting revolution speed $R_{Sn}$, the regulation revolution speed $R_{Ln}$, the convergent throttle opening degree $TH_{Cn}$, and the acceleration activation throttle opening degree $TH_{An}$.

It should be noted that a value of the engine speed R, processed through smoothing, is used when the throttle opening degree control section 26 determines a target value of the throttle opening degree TH by referring to a selected one of the maps $M_n$. Specifically, the engine speed, detected by the engine speed sensor 41, is not used without making any changes, but used after predetermined processing for inhibiting change of the engine speed R. Normally, the engine speed significantly changes, but the forgoing processing can inhibit significant change of the target value of the throttle opening degree. Specifically, the engine speed, processed through smoothing, is computed based on actual engine speed with the following Equation 1.

$$\text{(Equation 1)}$$
$$Nav = Navo + (N - Navo) * Sm$$

Equation 1 has the following parameter settings: "Nav" is the engine speed computed through smoothing; "N" is the engine speed detected by the engine speed sensor 41; "Navo" is the last-computed engine speed; and "Sm" is a smoothing coefficient (a constant greater than 0 and less than 1, e.g., 0.2).

Output of the engine 12 is thus changed by regulating the throttle opening degree. Vehicle speed of the motor cycle 1 is then changed based on output change of the engine 12 and a speed-change ratio in the speed-change device 11.

The ignition control section 27 is configured to control an ignition timing of the ignition device 61 based on the values detected by the various sensors. Specifically, the ignition control section 27 is configured to determine the timing for igniting the fuel based on the engine speed detected by the engine speed sensor 41, the throttle opening degree detected by the throttle opening degree sensor 42, the vehicle speed detected by the vehicle speed sensor 43, the accelerator operation amount detected by the accelerator operation amount sensor 44, and the current shift position detected by the shift position sensor 45. The ignition control section 27 is configured to control the ignition device 61 based on the determined ignition timing for executing ignition in the engine 12. In response to ignition, the fuel burns in the inside of the engine 12, and the engine 12 accordingly produces engine output.

The fuel supply control section 28 is configured to control the amount of fuel to be supplied from the fuel supply device 31 to the engine 12 based on the values detected by the sensors and the target value of the throttle opening degree determined by referring to a selected one of the maps $M_n$ and the like. The fuel supply device 31 regulates the amount of fuel to be supplied to the engine 12 based on a command signal from the fuel supply control section 28. Output of the engine 12 is changed in response to the fuel amount to be supplied from the fuel supply device 31.

Further, the fuel supply control section 28 activates an engine output inhibition control when the engine speed R is greater than or equal to predetermined output inhibit engine speed $R_{C4}$ (i.e., second speed) under a condition where the speed-change device 11 is set to be in the shift position of the fourth-speed stage. The output inhibition speed $R_{C4}$ is greater than the setting revolution speed $R_{S4}$ in the map $M_4$. Specifically, the output inhibition speed $R_{C4}$ is equal to the regulation revolution speed $R_{L4}$ (i.e., third speed). The engine output inhibition control is a type of control for inhibiting output of the engine 12. Output of the engine 12 is herein inhibited by halting the fuel supply from the fuel supply device 31 to the engine 12. For example, the fuel supply may be herein completely or intermittently halted. Further, output of the engine 12 may be inhibited by reducing the amount of fuel supply. The fuel supply control section 28 is configured to deactivate the engine output inhibition control when the engine speed R is less than or equal to a predetermined return speed $R_{r4}$ (i.e., fourth speed) during activation of the engine output inhibition control. Specifically, output inhibition of the engine 12 is cancelled and the normal fuel supply is executed. The return speed $R_{r4}$ is greater than or equal to the setting revolution speed $R_{S4}$ and less than the regulation revolution speed $R_{L4}$. In addition, the return speed $R_{r4}$ is less than the output inhibition speed $R_{C4}$.

Further, the fuel supply control section 28 activates the foregoing engine output inhibition control when the speed-change device 11 is set to be in one of the first to third speed shift positions. It should be noted, however, that the output inhibition speed $R_{Cn}$ and the return speed $R_{rn}$ are uniquely set for the individual first to third shift positions.

The storage section 19 stores various data necessary for traveling of the motor cycle 1, including the foregoing maps $M_n$.

(Control of Throttle Opening Degree during Execution of Engine Output Inhibition Control)

The throttle opening degree control section 26 is configured to control the throttle opening degree in a different way from the foregoing normal control during activation of the engine output inhibition control by the fuel supply control section 28. Specifically, the throttle opening degree control section 26 is configured to execute a control of moderating change of the throttle opening degree with respect to change of the engine speed during activation of the engine output inhibition control. The following description explains a control of the throttle opening degree to be executed during activation of the engine output inhibition control.

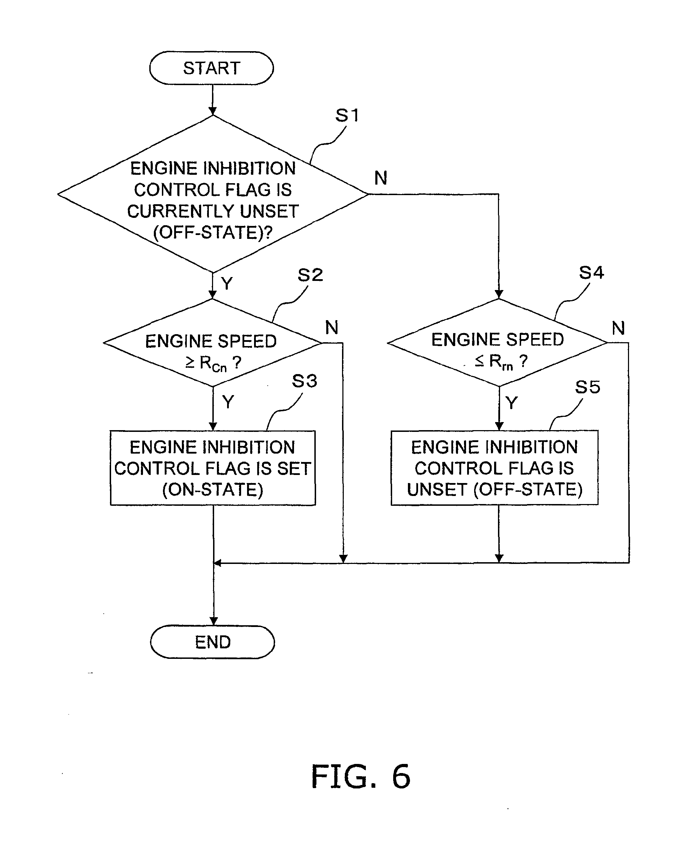

First, the throttle opening degree control section 26 executes a series of steps shown in the flowchart of FIG.6 in order to determine which of the controls should be executed, either the normal control or the control to be executed during activation of the engine inhibition control.

In Step S1, it is determined whether or not an engine inhibition control flag is currently unset (i.e., on an OFF state). The engine inhibition control flag is set (i.e., on an ON state) during activation of the engine output inhibition control, whereas the engine inhibition control flag is on the OFF state during deactivation of the engine output inhibition control. When the engine inhibition control flag is currently on the OFF state, the processing proceeds to Step S2.

In Step S2, it is determined whether or not the engine speed R is less than or equal to the foregoing output inhibition speed $R_{Cn}$. The output inhibition speed $R_{Cn}$ is uniquely set for the individual shift positions of the speed-change device 11. When the engine speed R is greater than or equal to the output inhibition speed $R_{Cn}$, the engine inhibition control flag is set (i.e., on the ON state) in Step S3. On the other hand, when the engine speed R is not greater than or equal to the output inhibition speed $R_{Cn}$, the engine inhibition control flag is kept unset.

When the engine inhibition control flag is not on the OFF state (i.e., on the ON state) in Step S1, the processing proceeds to Step S4. In Step S4, it is determined whether or not the engine speed R is less than or equal to the return speed $R_{rn}$. When the engine speed R is less than or equal to the return speed $R_{rn}$, the engine inhibition control flag is on the OFF state in Step S5. On the other hand, when the engine speed is not less than or equal to (i.e., greater than) the return speed $R_{rn}$, the engine inhibition control flag is kept on the ON state.

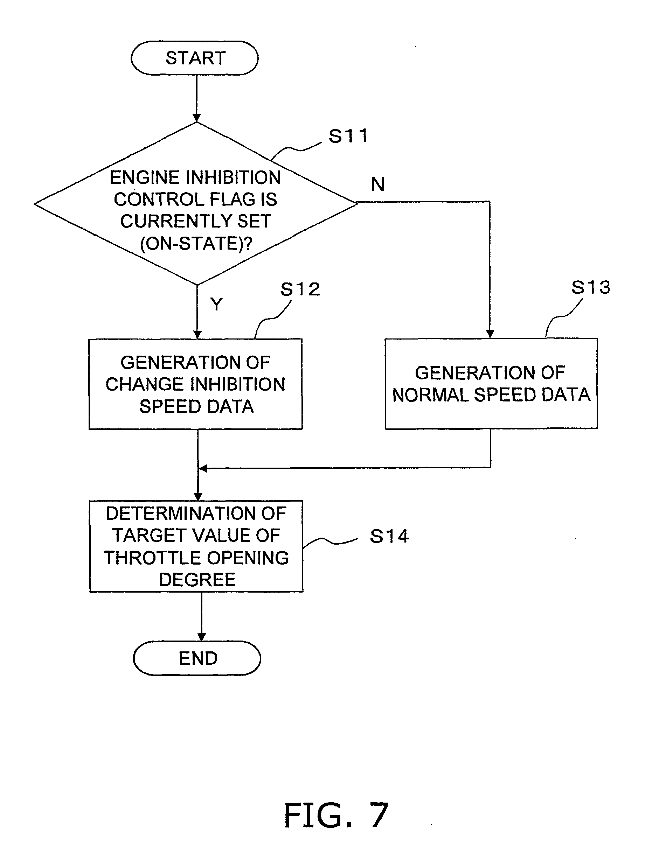

Next, the throttle opening degree control section 26 controls the throttle opening based on a flowchart shown in FIG.7.

In Step S11, it is determined whether or not the engine inhibition control flag is on the ON state. When the engine inhibition control flag is on the ON state, the processing proceeds to Step S12.

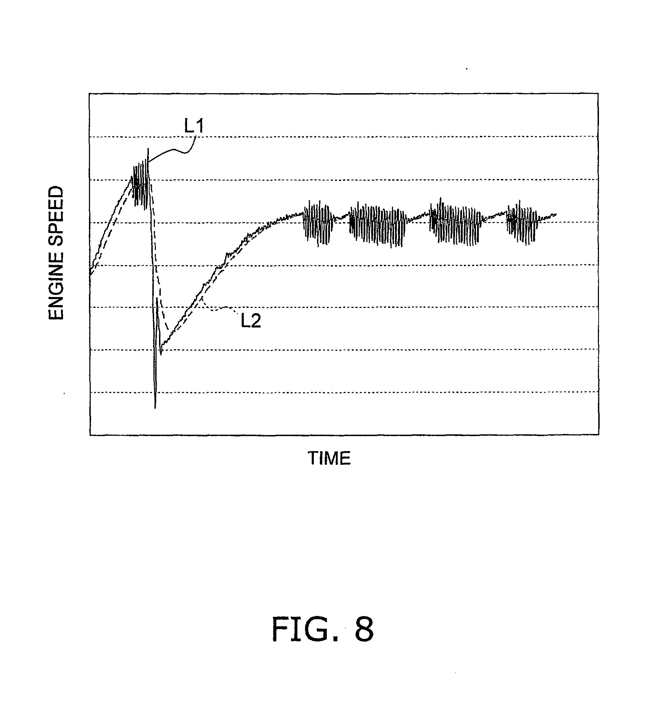

In Step S12, change inhibition speed data is generated. The change inhibition speed data is processed data for further reducing change of the engine speed detected by the engine speed sensor 41 than change of the engine speed during activation of the normal control. Specifically in Equation 1, smoothing coefficient Sm is set to be less than that under the activation of the normal control. Based on this, the change inhibition speed data is generated as shown in FIG.8 (see dashed line L2). Change of engine speed in the change inhibition speed data is further inhibited than change of actual engine speed (see solid line L1) as shown in FIG. 8. It should noted that the expression "change (of, e.g., the engine speed) is inhibited" specifically refers to a condition that a cycle of change and/or the amount of change is/are inhibited.

When the engine inhibition control flag is not on the ON state (i.e., on the OFF state) in Step S11, the processing proceeds to Step S13. In Step S13, normal speed data is generated. In this case, engine speed is processed through smoothing while smoothing coefficient Sm is set to be a predetermined value corresponding to activation of the normal control.

Subsequently, a target value of the throttle opening degree is determined in Step S14. As described above, the throttle opening degree control section 26 herein determines the target value of the throttle opening degree with reference to a corresponding one of the maps $M_n$. When the engine inhibition control flag is herein on the ON state, the throttle opening degree control section 26 determines the target value of the throttle opening degree using the change inhibition speed data generated in Step S12. Subsequently, the throttle opening degree control section 26 outputs a command signal, corresponding to the target value, to the throttle valve 32. Therefore, the throttle opening degree control section 26 controls the throttle opening degree based on the change inhibition speed data during activation of the engine output inhibition control. When the engine inhibition control flag is on the OFF state, on the other hand, the throttle opening degree control section 26 determines the target value of the throttle opening degree with use of the normal speed data generated in Step S13. Therefore, the throttle opening degree control section 26 controls the throttle opening degree based on the normal speed data during deactivation of the engine output inhibition control.

(Features)

Feature (1)

As described above, according to the motor cycle 1 of the foregoing exemplary embodiment, the engine output inhibition control is activated when the engine speed R is greater than or equal to the output inhibition speed $R_{Cn}$ in the first to fourth speed stages. Therefore, when twisting the accelerator grip 4b, a rider feels that speed of the motor cycle 1 is not sufficiently accelerated against his/her own expectation. The rider is thereby encouraged to shift gears up.

Further, even when output of the engine 12 is inhibited, the throttle opening degree TH is kept at the convergent throttle opening degree $TH_{Cn}$, which is constant opening degree for enabling acceleration of the motor cycle 1. Therefore, it is possible to suppress depression of a rider's feeling of driving.

Further, the fuel supply control section 28 reduces the throttle opening degree to the convergent throttle opening degree $TH_{C5}$ when the speed-change device 11 is set to be in the highest shift position (i.e., the fifth-speed stage) and further the engine speed R is greater than or equal to the regulation revolution speed $R_{L5}$. The motor cycle 1 is prevented from being accelerated at the convergent throttle opening degree $TH_{C5}$. Therefore, the maximum speed of the motor cycle 1 is regulated during travelling in the highest shift position.

Overall, the engine output inhibition control is deactivated when the speed-change device 11 is set to be in the highest shift position (i.e., the fifth-speed stage). Excessive engine braking is thereby prevented when the engine speed R exceeds the setting revolution speed $R_{S5}$ in the fifth-speed stage.

Feature (2)

During activation of the engine output inhibition control in the first to fourth speed stages, the motor cycle 1 of the present exemplary embodiment is configured to control the throttle valve 32 under a condition where change of the throttle opening degree with respect to change of the engine speed is further moderated than that during activation of the normal control. Accordingly, significant change of the throttle opening degree TH is inhibited even when the engine speed R is repetitively increased and decreased in a range between the setting revolution speed $R_{Sn}$ and the regulation revolution speed $R_{Ln}$ in a corresponding one of the maps $M_n$. Accordingly, a rider is inhibited from feeling uncomfortableness during activation of the engine output inhibition control. Further, it is possible to inhibit frequent significant change of the throttle opening degree. Therefore, this can inhibit deterioration in durability of the throttle valve 32.

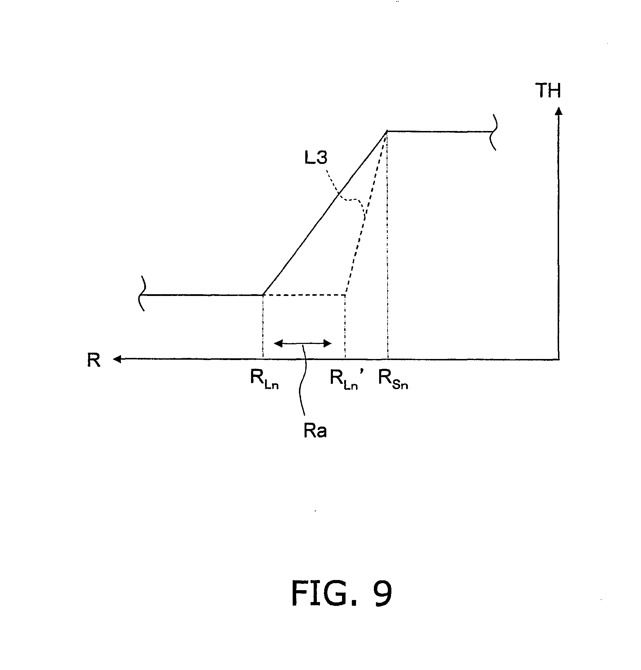

Further, the throttle opening degree control section 26 generates the change inhibition speed data obtained through processing for reducing change of the engine speed, and controls the throttle opening degree based on the change inhibition speed data. In this case, reduction in acceleration performance can be further inhibited than a situation where the regulation revolution speed is changed from $R_{Ln}$ to $R_{Ln'}$ as shown in FIG. 9. More specifically, significant change of the throttle opening degree TH can be prevented with respect to change of the engine speed R if a range $R_a$, in which the engine speed R is repetitively increased and decreased, is not interposed between the setting revolution speed $R_{Sn}$ and the regulation revolution speed $R_{Ln}$. For achieving this, shifting of the regulation revolution speed from $R_{Ln}$ to $R_{Ln'}$ in a corresponding one of the maps $M_n$ is assumable as indicated with a dashed line L3 in FIG. 9. In this case, $R_{Ln'}$ is smaller than the range $R_a$ in which the engine speed R is repetitively increased and decreased. Further, the throttle opening degree TH in a corresponding one of the maps $M_n$ is constantly set to be the convergent throttle opening degree $TH_{Cn}$ in the range $R_a$ in which the engine speed R is repetitively increased and decreased. Therefore, significant change of the throttle opening degree TH can be inhibited even when the engine speed R is significantly changed. In this case, however, the throttle opening degree TH is set to be low in a range between $R_{Ln}$ and $R_{Ln'}$. Therefore, the acceleration performance may be deteriorated. To deal with the drawback, the motor cycle 1 according to the present exemplary embodiment controls the throttle opening degree TH, not with the regulation revolution speed that is set to be low speed, but with the change inhibition speed data obtained through processing for reducing change of the engine speed R. Accordingly, significant change of the throttle opening degree TH can be inhibited and simultaneously deterioration of the acceleration performance can be inhibited.

<Second Exemplary Embodiment>

According to the motor cycle 1 of the first exemplary embodiment, the throttle opening degree control section 26 is configured to control the throttle opening degree with the change inhibition speed data during activation of the engine output inhibition control. In this case, the change inhibition speed data is different from the normal speed data to be used during activation of the normal control. It should be noted, however, that the maps $M_n$ are used by both of the normal control and the engine output inhibition control.

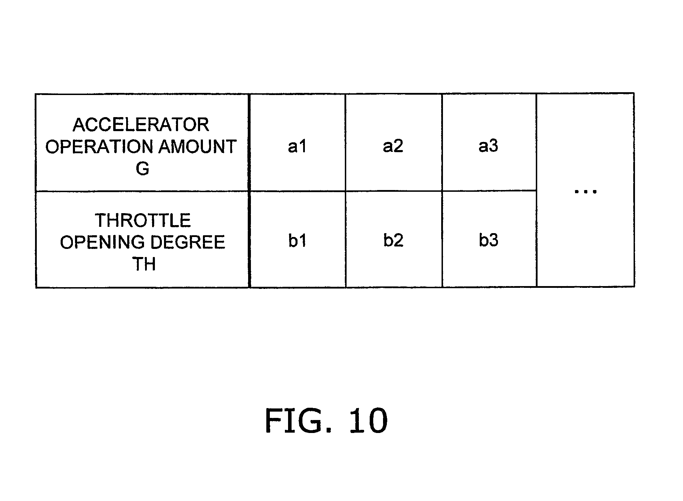

According to the motor cycle 1 of a second exemplary embodiment, on the other hand, the throttle opening degree control section 26 is configured to control the throttle opening degree with a corresponding one of change inhibition tables (i.e., second reference information) during activation of the engine output inhibition control. Specifically, the storage section 19 stores the change inhibition tables in addition to the maps $M_n$ (i.e., first reference information). As illustrated in FIG.10, the individual change inhibition tables indicate a relation between the accelerator operation amount G and the throttle opening degree TH. It should be herein noted that the individual change inhibition tables do not include the engine speed R as a parameter. Further, the inhibition tables, stored in the storage section 19, correspond to the first to fourth shift positions excluding the highest shift position (i.e., the fifth-speed stage in the present exemplary embodiment). In other words, the change inhibition tables are uniquely prepared for the individual shift positions in which the engine output inhibition control is executed. In FIG.10, symbols a1, a2, a3, b1, b2, and b3 are predetermined constants. Values, not included in the change inhibition tables, are obtained through computation based on the values included in the change inhibition table.

The throttle opening degree control section 26 is configure to control the throttle opening degree TH based on a corresponding one of the normal maps $M_n$ during deactivation of the engine output inhibition control. On the other hand, the throttle opening degree control section 26 is configured to control the throttle opening degree TH based on a corresponding one of the change inhibition tables during activation of the engine output inhibition control. Specifically, the throttle opening degree control section 26 is configured to select one of the change inhibition tables corresponding to the current shift position and reads out it from the storage section 19. The throttle opening degree control section 26 is configured to determine the throttle opening degree TH corresponding to the accelerator operation amount G detected by the accelerator operation amount sensor 44 as the target value by referring to the selected change inhibition table. Subsequently, the throttle opening degree control section 26 is configured to control the throttle opening degree TH of the throttle valve 32 for setting it to be the target value. During activation of the engine output inhibition control, the throttle opening degree control section 26 is thus configured to control the throttle opening degree TH dependently on the accelerator operation amount G but independently from the engine speed R.

Other structures and controls of the motor cycle 1 of the second exemplary embodiment are the same as those of the motor cycle 1 of the first exemplary embodiment.

With the foregoing control, the motor cycle 1 of the second exemplary embodiment can achieve the same advantageous effects as those of the motor cycle 1 of the first exemplary embodiment

<Third Exemplary Embodiment>

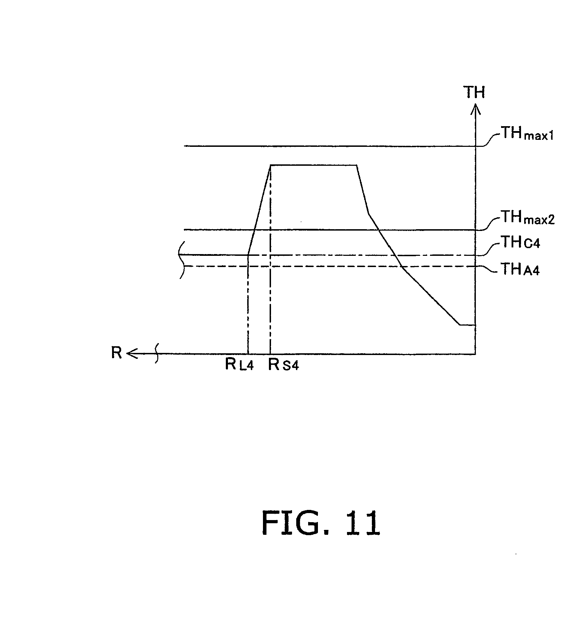

In the motor cycle 1 of a third exemplary embodiment, the throttle opening degree control section 26 is configured to set, as a target throttle opening degree of the throttle valve 32, smaller one of the preliminarily-set maximum throttle opening degree and the throttle opening degree TH determined depending on the engine speed R. The storage section 19 stores the maximum throttle opening degrees uniquely set for the individual maps $M_n$. Specifically, the throttle opening degree control section 26 is configured to compare the maximum throttle opening degree and the throttle opening degree TH determined depending on the engine speed R by referring to a corresponding one of the maps $M_n$. Based on the comparison, the throttle opening degree control section 26 is configured to set smaller one of them as the target opening degree of the throttle valve 32. In this case, the storage section 19 stores two types of maximum throttle opening degrees. One is the normal maximum throttle opening degree to be used during activation of the normal control. The other is the change inhibition maximum throttle opening degree to be used during activation of the engine output inhibition control. As shown in FIG.11, a change inhibition maximum throttle opening degree $TH_{max2}$ is smaller than normal maximum throttle opening degree $TH_{max1}$. Further, the change inhibition maximum throttle opening degree $TH_{max2}$ is larger than the convergent throttle opening degree $TH_{C4}$ but smaller than throttle opening degree TH corresponding to the setting revolution speed $R_{S4}$.

During activation of the normal control, the throttle opening degree control section 26 is configured to set, as the target throttle opening degree of the throttle valve 32, smaller one of the normal maximum throttle opening degree and the throttle opening degree TH determined by referring to a corresponding one of the maps $M_n$. During activation of the engine output inhibition control, on the other hand, the throttle opening degree control section 26 is configured to set, as the target opening degree of the throttle valve 32, smaller one of the change inhibition maximum throttle opening degree and the throttle opening degree TH determined by referring to a corresponding one of the maps $M_n$. In other words, the throttle opening degree control section 26 is configured to reduce the maximum throttle opening degree during activation of the engine output inhibition control.

Other structures and controls of the motor cycle 1 of the third exemplary embodiment are the same as those of the motor cycle 1 of the first exemplary embodiment.

With the foregoing control, the motor cycle 1 of the third exemplary embodiment can achieve the same advantageous effects as those of the motor cycle 1 of the first exemplary embodiment.

<Other Exemplary Embodiments>

The saddle-riding vehicle according to the present invention is not limited to the vehicles according to the foregoing exemplary embodiments. Any changes and modifications can be made for the saddle-riding vehicle without departing from the scope of the present invention.

The saddle-riding vehicle according to the present invention is not limited to the foregoing motor cycle 1. Any suitable saddle-riding vehicle can be adopted as the saddle-riding vehicle of the present invention. For example, the scooter-type vehicles may be adopted as the saddle-riding vehicle of the present invention. Alternatively, the all terrain vehicles (ATVs) such as the four-wheel buggies may be adopted as the saddle-riding vehicle of the present invention.

The vehicle speed sensor 43 is not necessarily attached to the power transmission mechanism 13. For example, the vehicle speed sensor 43 may be configured to detect revolution speed of the outputs shaft of the engine 12 while being attached to the engine 12. Alternatively, the vehicle speed sensor 43 may be configured to detect revolution speed of the output shaft of the speed-change device 11 while being attached to the speed-change device 11. Yet alternatively, the vehicle speed sensor 43 may be configured to detect rotational speed of the front wheel 5 or the rear wheel 7 (see FIG.1) wile being attached to the rear wheel 7 or the front wheel 5.

The engine output inhibition control is not necessarily executed in all the shift positions of the speed stages excluding the highest shift position. For example, the engine output inhibition control may be executed in a part of the shift positions excluding the highest shift position, depending on the driving performance of the engine 12 or the travelling performance of the motor cycle 1. When the speed-change device 11 are configured to be set to be in one of shift positions of first to sixth speed stages, the engine output inhibition control may be executed only in the shift position of the fifth-speed stage. Alternatively, the engine output inhibition control may be executed in the shift positions of the third, fourth and fifth speed stages. Yet alternatively, the engine output inhibition control may not be executed in the shift position immediately lower than the highest shift stage.

Further, the engine output inhibition control may not be a type of control for halting fuel supply but a type of control for halting ignition in the ignition device 61.

Further, the decision of the throttle opening degree and the decision of execution of the engine output inhibition control may not be executed based on the engine speed but based on the vehicle speed.

In the first exemplary embodiment, the change inhibition speed data may not be generated through smoothing but through any suitable processing for reducing change of the engine speed. For example, the change inhibition speed data may be generated by processing the engine speed through a low-pass filter. Alternatively, the change inhibition speed data may be generated by computing moving average of the engine speed. Yet alternatively, the change inhibition speed data may be generated by the combination of the above methods.

In the second exemplary embodiment, the second reference information corresponds to the change inhibition tables. However, the second reference information may be change inhibition maps. The individual change inhibition maps indicate a relation between the accelerator operation amount and the throttle opening degree excluding the engine speed.

Any suitable values of the engine speed R may be set as the output inhibition speed $R_{Cn}$ as long as they are greater than the setting revolution speed $R_{Sn}$ and greater than the return speed $R_{rn}$ (i.e., fourth speed) in the maps $M_n$. For example, the output inhibition speed $R_{Cn}$ may be greater than the regulation revolution speed $R_{Ln}$ (i.e., third speed). Alternatively, the output inhibition speed $R_{Cn}$ may be greater than the setting revolution speed $R_{Sn}$ but less than the regulation revolution speed $R_{Ln}$. Further, the return speed $R_{rn}$ may be less than the setting revolution speed $R_{Sn}$.

Structures of the speed-change device and the clutches are not limited to those of the foregoing exemplary embodiments. For example, the automated manual transmissions (AMTs) or the automatic transmissions provided with a manual-mode function may be applied to the saddle-riding vehicle of the present invention. Alternatively, the continuously variable transmissions (CVTs), provided with plural gear stages corresponding to plural fixed gear ratios, may be applied to the saddle-riding vehicle of the present invention.

Fuel may be supplied to an intake port of the engine 12. Alternatively, fuel may be directly sprayed into the combustion chamber in the engine 12.

INDUSTRIAL APPLICABILITY

The present invention has advantageous effects of inhibiting a rider from feeling uncomfortableness and inhibiting a rider from driving a vehicle without shifting gears up. The present invention is therefore useful as a saddle-riding vehicle.

EXPLANATION OF THE REFERENCE NUMERALS

12    Engine
11    Speed-change device
33    Intake pipe (Intake Path)
32    Throttle Valve
41    Engine speed sensor (Speed detector)
26    Throttle opening degree control section

28    Fuel supply control section (Engine output control section)
4b    Accelerator grip (Accelerator operation member)
44    Accelerator operation amount sensor (Accelerator operation amount detector)
19    Storage section

**Claims**

1.  A saddle-riding vehicle, comprising:

    a wheel;
    an engine;
    a speed-change device configured to transmit driving force of the engine to the wheel while changing speed of the driving force in a plurality of speed stages;
    an intake path configured to introduce air into the engine;
    a throttle valve mounted in the intake path;
    a speed detector configured to detect either revolution speed of the engine or speed of the vehicle;
    a throttle opening degree control section configured to control opening degree of the throttle valve based on the speed detected by the speed detector, the throttle opening degree control section being configured to reduce the opening degree of the throttle valve when the detected speed is greater than or equal to predetermined first speed; and
    an engine output control section configured to activate an engine output inhibition control for inhibiting output of the engine when the detected speed is greater than or equal to second speed faster than the first speed under a condition where the speed-change device is set to be in a speed stage lower than a highest speed stage, and
    wherein the throttle opening control section is configured to moderate change of the opening degree of the throttle valve with respect to change of the detected speed during activation of the engine output inhibition control than change of the opening degree of the throttle valve with respect to change of the detected speed during deactivation of the engine output inhibition control.

2.  The saddle-riding vehicle according to claim 1, wherein the throttle opening control section is configured to generate change inhibition speed data through processing for reducing the change of the detected speed and is configured to control the opening degree of the throttle valve based on the change inhibition speed data.

3.  The saddle-riding vehicle according to claim 1, further comprising:

    an accelerator operation member configured to operate the throttle valve; and
    an accelerator operation amount detector configured to detect accelerator operation amount corresponding to operation amount of the accelerator operation member, and
    wherein the throttle opening degree control section is configured to control the opening degree of the throttle valve dependently on the accelerator operation amount but independently from the detected speed during activation of the engine output inhibition control.

4.  The saddle-riding vehicle according to claim 3, further comprising:

    a storage section storing first reference information and second reference information, the first reference information indicating a relation among the accelerator operation amount, the detected speed, and the opening degree of the throttle valve, the second reference information indicating a relation between the accelerator operation amount and the opening degree of the throttle valve, and
    wherein the throttle opening degree control section is configured to control the opening degree of the throttle valve based on the first reference information during deactivation of the engine output inhibition control whereas the opening degree control section is configured to control the opening degree of the throttle valve based on the second reference information during activation of the engine output inhibition control.

5.  The saddle-riding vehicle according to claim 1, wherein the throttle opening degree control section is configured to set, as a target opening degree of the throttle valve, smaller one of preliminarily-set maximum opening degree of the throttle valve and opening degree of the throttle valve to be determined in accordance with the detected speed, and the throttle opening degree control section is configured to reduce the maximum opening degree of the throttle valve during activation of the engine output inhibition control.

6. The saddle-type vehicle according to claim 1, wherein the throttle opening degree control section is configured to reduce the opening degree of the throttle valve in proportion to increase of the detected speed under a condition that the detected speed is in a range between the firsts speed and third speed faster than the first speed, the second speed is greater than the first speed, and the engine output control section is configured to deactivate the engine output inhibition control when the detected speed is less than or equal to fourth speed slower than the second speed during activation of the engine output inhibition control.

**Patentansprüche**

1. Ein Sattelfahrzeug, das folgende Merkmale aufweist:

ein Rad;
einen Motor;
eine Gangschaltvorrichtung, die ausgebildet ist, um eine Antriebskraft des Motors auf das Rad zu übertragen, während eine Geschwindigkeit der Antriebskraft in einer Vielzahl von Geschwindigkeitsstufen verändert wird;
einen Einlassweg, der ausgebildet ist, um Luft in den Motor einzuführen;
ein Drosselventil, das in dem Einlassweg angebracht ist;
einen Geschwindigkeitsdetektor, der ausgebildet ist, um entweder eine Drehzahl des Motors oder eine Geschwindigkeit des Fahrzeugs zu erfassen;
einen Drosselöffnungsgrad-Steuerabschnitt, der ausgebildet ist, um einen Öffnungsgrad des Drosselventils basierend auf der Geschwindigkeit zu steuern, die durch den Geschwindigkeitsdetektor erfasst wird, wobei der Drosselöffnungsgrad-Steuerabschnitt ausgebildet ist, um den Öffnungsgrad des Drosselventils zu reduzieren, wenn die erfasste Geschwindigkeit größer oder gleich einer vorbestimmten ersten Geschwindigkeit ist; und
einen Motorausgabe-Steuerabschnitt, der ausgebildet ist, um eine Motorausgabehemmsteuerung zum Hemmen einer Ausgabe des Motors, wenn die erfasste Geschwindigkeit größer oder gleich einer zweiten Geschwindigkeit ist, die schneller ist als die erste Geschwindigkeit, zu aktivieren, unter einer Bedingung, bei der die Gangschaltvorrichtung eingestellt ist, um sich in einer Geschwindigkeitsstufe zu befinden, die niedriger ist als eine höchste Geschwindigkeitsstufe, und
wobei der Drosselöffnung-Steuerabschnitt ausgebildet ist, um eine Veränderung des Öffnungsgrads des Drosselventils in Bezug auf eine Änderung der erfassten Geschwindigkeit während einer Aktivierung der Motorausgabehemmsteuerung gegenüber einer Veränderung des Öffnungsgrads des Drosselventils in Bezug auf eine Veränderung der erfassten Geschwindigkeit während einer Deaktivierung der Motorausgabehemmsteuerung zu mäßigen.

2. Das Sattelfahrzeug gemäß Anspruch 1,
bei dem der Drosselöffnung-Steuerabschnitt ausgebildet ist, um Änderungshemmgeschwindigkeitsdaten durch Verarbeiten zum Reduzieren der Veränderung der erfassten Geschwindigkeit zu erzeugen, und ausgebildet ist, um den Öffnungsgrad des Drosselventils basierend auf den Änderungshemmgeschwindigkeitsdaten zu steuern.

3. Das Sattelfahrzeug gemäß Anspruch 1, das ferner folgende Merkmale aufweist:

ein Gaspedalbedienbauteil, das ausgebildet ist, um das Drosselventil zu bedienen; und
einen Gaspedalbediengrößendetektor, der ausgebildet ist, um eine Gaspedalbediengröße zu erfassen, die einer Bediengröße des Gaspedalbedienbauteils entspricht, und
wobei der Drosselöffnungsgrad-Steuerabschnitt ausgebildet ist, um den Öffnungsgrad des Drosselventils in Abhängigkeit von der Gaspedalbediengröße, jedoch unabhängig von der erfassten Geschwindigkeit während einer Aktivierung der Motorausgabehemmsteuerung zu steuern.

4. Das Sattelfahrzeug gemäß Anspruch 3, das ferner folgendes Merkmal aufweist:

einen Speicherabschnitt, der erste Referenzinformationen und zweite Referenzinformationen speichert, wobei die ersten Referenzinformationen eine Beziehung zwischen der Gaspedalbediengröße, der erfassten Geschwindigkeit und dem Öffnungsgrad des Drosselventils anzeigen, wobei die zweiten Referenzinformationen eine Beziehung zwischen der Gaspedalbediengröße und dem Öffnungsgrad des Drosselventils anzeigen, und

wobei der Drosselöffnungsgrad-Steuerabschnitt ausgebildet ist, um den Öffnungsgrad des Drosselventils während einer Deaktivierung der Motorausgabehemmsteuerung basierend auf den ersten Referenzinformationen zu steuern, während der Öffnungsgrad-Steuerabschnitt ausgebildet ist, um den Öffnungsgrad des Drosselventils während einer Aktivierung der Motorausgabehemmsteuerung basierend auf den zweiten Referenzinformationen zu steuern.

5. Das Sattelfahrzeug gemäß Anspruch 1,
bei dem der Drosselöffnungsgrad-Steuerabschnitt ausgebildet ist, um als Zielöffnungsgrad des Drosselventils einen kleineren eines vorläufig eingestellten maximalen Öffnungsgrads des Drosselventils und eines Öffnungsgrads des Drosselventils, der gemäß der erfassten Geschwindigkeit bestimmt werden soll, einzustellen, und der Drosselöffnungsgrad-Steuerabschnitt ausgebildet ist, um den maximalen Öffnungsgrad des Drosselventils während einer Aktivierung der Motorausgabehemmsteuerung zu reduzieren.

6. Das Sattelfahrzeug gemäß Anspruch 1,
bei dem der Drosselöffnungsgrad-Steuerabschnitt ausgebildet ist, um den Öffnungsgrad des Drosselventils proportional zu einem Anstieg der erfassten Geschwindigkeit zu reduzieren, unter einer Bedingung, dass die erfasste Geschwindigkeit in einem Bereich zwischen der ersten Geschwindigkeit und einer dritten Geschwindigkeit liegt, die schneller ist als die erste Geschwindigkeit,
wobei die zweite Geschwindigkeit größer ist als die erste Geschwindigkeit, und der Motorausgabe-Steuerabschnitt ausgebildet ist, um die Motorausgabehemmsteuerung zu deaktivieren, wenn die erfasste Geschwindigkeit während einer Aktivierung der Motorausgabehemmsteuerung kleiner oder gleich einer vierten Geschwindigkeit ist, die langsamer ist als die zweite Geschwindigkeit.

**Revendications**

1. Véhicule du type à selle comprenant:

    une roue;
    un moteur;
    un dispositif de changement de vitesse configuré pour transmettre la force d'entraînement du moteur à la roue tout en changeant la vitesse de la force d'entraînement en une pluralité d'étages de vitesse;
    un trajet d'entrée configuré pour introduire de l'air dans le moteur;
    une soupape d'étranglement montée dans le trajet d'entrée;
    un détecteur de vitesse configuré pour détecter soit la vitesse de rotation du moteur, soit la vitesse du véhicule;
    un segment de commande de degré d'ouverture d'étranglement configuré pour régler le degré d'ouverture de la soupape d'étranglement sur base de la vitesse détectée par le détecteur de vitesse, le segment de réglage de degré d'ouverture d'étranglement étant configuré pour réduire le degré d'ouverture de la soupape d'étranglement lorsque la vitesse détectée est supérieure ou égale à la première vitesse prédéterminée; et
    un segment de réglage de sortie de moteur configuré pour activer une commande d'inhibition de sortie de moteur destinée à inhiber la sortie du moteur lorsque la vitesse détectée est supérieure ou égale à la deuxième vitesse plus rapide que la première vitesse dans une situation où le dispositif de changement de vitesse est réglé pour être à un étage de vitesse inférieur à un étage de vitesse le plus élevé, et
    dans lequel le segment de réglage d'ouverture d'étranglement est configuré pour modérer le changement du degré d'ouverture de la soupape d'étranglement par rapport au changement de la vitesse détectée pendant l'activation de la commande d'inhibition de sortie de moteur par rapport au changement du degré d'ouverture de la soupape d'étranglement par rapport au changement de la vitesse détectée pendant la désactivation de la commande d'inhibition de sortie du moteur.

2. Véhicule du type à selle selon la revendication 1,
dans lequel le segment de réglage d'ouverture d'étranglement est configuré pour générer un changement des données de vitesse d'inhibition par traitement pour réduire le changement de la vitesse détectée et est configuré pour régler le degré d'ouverture de la soupape d'étranglement sur base du changement des données de vitesse d'inhibition.

3. Véhicule du type à selle selon la revendication 1, comprenant par ailleurs:

    un élément d'actionnement d'accélérateur configuré pour actionner la soupape d'étranglement; et

un détecteur de quantité d'actionnement d'accélérateur configuré pour détecter la quantité d'actionnement d'accélérateur correspondant à la quantité d'actionnement de l'élément d'actionnement d'accélérateur, et dans lequel le segment de réglage de degré d'ouverture d'étranglement est configuré pour régler le degré d'ouverture de la soupape d'étranglement en fonction de la quantité d'actionnement d'accélérateur, mais indépendamment de la vitesse détectée pendant l'activation de la commande d'inhibition de sortie du moteur.

4. Véhicule du type à selle selon la revendication 3, comprenant par ailleurs:

un segment de mémorisation des premières informations de référence et des deuxièmes informations de référence, les premières informations de référence indiquant un rapport parmi la quantité d'actionnement d'accélérateur, la vitesse détectée, et le degré d'ouverture de la soupape d'étranglement, les deuxièmes informations de référence indiquant un rapport entre la quantité d'actionnement de l'accélérateur et le degré d'ouverture de la soupape d'étranglement, et dans lequel le segment de réglage de degré d'ouverture d'étranglement est configuré pour régler le degré d'ouverture de la soupape d'étranglement sur base des premières informations de référence pendant la désactivation de la commande d'inhibition de sortie de moteur, tandis que le segment de réglage de degré d'ouverture est configuré pour régler le degré d'ouverture de la soupape d'étranglement sur base des deuxièmes informations de référence pendant l'activation de la commande d'inhibition de sortie de moteur.

5. Véhicule du type à selle selon la revendication 1, dans lequel le segment de réglage de degré d'ouverture d'étranglement est configuré pour régler, comme degré d'ouverture cible de la soupape d'étranglement, le plus petit parmi le degré d'ouverture maximal réglé de manière préliminaire de la soupape d'étranglement et le degré d'ouverture de la soupape d'étranglement à déterminer selon la vitesse détectée, et le segment de réglage de degré d'ouverture d'étranglement est configuré pour réduire le degré d'ouverture maximal de la soupape d'étranglement pendant l'activation de la commande d'inhibition de sortie de moteur.

6. Véhicule du type à selle selon la revendication 1, dans lequel le segment de réglage de degré d'ouverture d'étranglement est configuré pour réduire le degré d'ouverture de la soupape d'étranglement proportionnellement à l'augmentation de la vitesse détectée dans une condition où la vitesse détectée se situe dans une plage comprise entre la première vitesse et la troisième vitesse plus rapide que la première vitesse, la deuxième vitesse est supérieure à la première vitesse, et le segment de réglage de sortie de moteur est configuré pour désactiver la commande d'inhibition de sortie du moteur lorsque la vitesse détectée est inférieure ou égale à une quatrième vitesse inférieure à la deuxième vitesse pendant l'activation de la commande d'inhibition de sortie de moteur.

FIG. 1

EP 2 299 093 B1

FIG. 2

ACCELERATOR GRIP

ECU

THROTTLE OPENING DEGREE CONTROL SECTION

FULE SUPPLY CONTROL SECTION

IGNITION CONTROL SECTION

STORAGE SECTION

FIG. 3

18

## FIG. 4A

## FIG. 4B

## FIG. 5A

## FIG. 5B

START

S1

ENGINE INHIBITION
CONTROL FLAG IS
CURRENTLY UNSET
(OFF-STATE)?

N

Y

S2

ENGINE SPEED
$\geq R_{Cn}$ ?

N

Y

S3

ENGINE INHIBITION
CONTROL FLAG IS SET
(ON-STATE)

S4

ENGINE SPEED
$\leq R_{rn}$ ?

N

Y

S5

ENGINE INHIBITION
CONTROL FLAG IS
UNSET (OFF-STATE)

END

FIG. 6

START

S11

ENGINE INHIBITION CONTROL FLAG IS CURRENTLY SET (ON-STATE)?

N

Y

S12

GENERATION OF CHANGE INHIBITION SPEED DATA

S13

GENERATION OF NORMAL SPEED DATA

DETERMINATION OF TARGET VALUE OF THROTTLE OPENING DEGREE

S14

END

FIG. 7

FIG. 8

FIG. 9

| ACCELERATOR OPERATION AMOUNT G | a1 | a2 | a3 | ... |
|---|---|---|---|---|
| THROTTLE OPENING DEGREE TH | b1 | b2 | b3 | |

# FIG. 10

FIG. 11

**EP 2 299 093 B1**

## REFERENCES CITED IN THE DESCRIPTION

**Patent documents cited in the description**

• JP 2006104953 A